# EUROPEAN PATENT APPLICATION

(11) **EP 2 077 423 A1**
(43) Date of publication of application: **08.07.2009**
(21) Application number: 08150001.9
(22) Date of filing: 02.01.2008
(51) Int. Cl.: F24D 19/10

(54) **Regulation of flow temperature of a liquid in a heating circuit**

(71) Applicant: Esbe AB, 330 21 Reftele (SE)
(72) Inventor: Johansson, Christer, 33442 Värnamo (SE); Hallberg, Henrik, 33010 Bredaryd (SE); Hjelte, Nils, 331 33 Värnamo (SE)
(74) Representative: Hjalmarsson, Magnus Axel

(57) **Abstract**

A regulating circuit and a method for regulating flow temperature of a liquid in a heating circuit (1) in a domestic central heating system, which circuit comprises a heat source (2,20) and a heat sink (3,30), wherein an outflow liquid from the heat source is supplied as an inflow liquid to the heat sink and vice versa, comprises the following steps:
Mixing an outflow liquid from a first (2,30) of the heat source and the heat sink with an outflow liquid from a second (3,20) of the heat source and the heat sink in a thermostatic threeway valve (4), for regulating an inflow temperature of the inflow liquid to said first of the heat source and the heat sink.
Measuring an outflow temperature, or a temperature related thereto, of the outflow liquid from said first of the heat source and the heat sink.
Comparing the measured outflow temperature with a desired temperature.
If there is a difference between the measured temperature and the desired temperature regulating the outflow temperature of the outflow liquid from said first of the heat source and the heat sink by controlling rotational speed of a pump (5), arranged downstreams the valve (4).

## Description

### Technical Field of the Invention

Present invention relates to a method for regulating flow temperature of a liquid in a heating circuit in a domestic central heating system, which circuit comprises a heat source and a heat sink, wherein an outflow liquid from the heat source is supplied as an inflow liquid to the heat sink and vice versa, and a regulating circuit using the method.

### Background Art

A heating circuit of the above mentioned kind is used in domestic central heating systems for heating of, for example, tap water or radiators. Heat is transferred in the circuit by means of the liquid, which is normally water. The heat source can be a boiler, which is to heat the water in a thermal storage vessel, and the heat sink can be a thermal storage vessel or a heat exchanger.

The temperature of the water is affected by heat delivered to the circuit, such as the boiler capacity and the firing of fuel, and the withdrawal of heat, such as heat dissipation in the heat exchanger or tapping hot water. The system is complex as the heat transfer often is done in several steps and regulating in one step will affect others.

It is also important to deliver water with an appropriate temperature to the heat source and the heat sink as too cold or too hot water could reduce the capacity and even impair them. The water flowing to a boiler should for example preferably have a temperature of at least 60°C for optimum combustion and for preventing corrosion and tar formation. Further the water flowing from the boiler should have a high and even temperature in order not to supply the thermal storage vessel with water with a too low temperature disturbing the desired temperature stratification of the water in said vessel. A heat exchanger on the other hand should not work at a temperature exceeding 80° due to the risk of precipitation of lime. Further when a heat exchanger is heating tap water the risk of scalding the consumer must be considered.

### Summary of the Invention

The object of the invention is to provide a simple and effective regulating method and regulating circuit for regulating flow temperature of a liquid in a heating circuit in a domestic central heating system, by means of which method and circuit it is possible to regulate the temperature of the liquid flowing to and from the heat source or the heat sink.

This object is achieved as regards the method by a method which comprises mixing an outflow liquid from a first of the heat source and the heat sink with an outflow liquid from a second of the heat source and the heat sink in a thermostatic threeway valve, for regulating an inflow temperature of an inflow liquid to said first of the heat source and the heat sink, measuring an outflow temperature, or a temperature related thereto, of the outflow liquid from said first of the heat source and the heat sink, comparing the measured outflow temperature with a desired temperature and if there is a difference between the measured temperature and the desired temperature regulating the outflow temperature of the outflow liquid from said first of the heat source and the heat sink by controlling rotational speed of a pump, arranged downstreams the valve.

When said first of the heat source and heat sink is a boiler and the heat sink is a thermal storage vessel, the regulation of the liquid temperature by controlling rotational speed is preferably done in such a way that if the measured outflow temperature is lower than a desired temperature the rotational speed is decreased, whereas if the measured outflow temperature is higher than the desired temperature the rotational speed is increased.

Preferably a thermometer is provided in the first inlet port of the thermostatic threeway valve, i.e. outflow temperature is measured in this inlet port, and the pump is incorporated in the valve. This provides for a compact regulating unit with a short wiring between the thermometer and the pump.

When said first of the heat source and heat sink is a heat exchanger, the regulation of the liquid temperature by controlling rotational speed is preferably done in such a way that if the measured outflow temperature is lower than a desired temperature the rotational speed is increased, whereas if the measured outflow temperature is higher than the desired temperature the rotational speed is decreased. Further the outflow temperature is measured at an outlet from an secondary side of the heat exchanger. This provides for supply of liquid with appropriate temperatures to the heat exchanger taking into consideration any temperature changes on its secondary side.

This object is further achieved as regards the regulating circuit by a regulating circuit for regulating flow temperature of a liquid in a heating circuit in a domestic central heating system, in which heating circuit the heat source is a boiler and the heat sink is a thermal storage vessel, which is connected to the boiler by means of a first conduit for transfer of the liquid from the thermal storage vessel to the boiler and a second conduit for transfer of the liquid from the boiler to the thermal storage vessel, wherein a bypass is provided for transfer of liquid directly from the second conduit to the first conduit, which regulating circuit is characterized in that a thermostatic threeway valve is provided in the first conduit and connected to the bypass for regulating an inflow temperature to the boiler by mixing the liquid from the first conduit with the liquid from the second conduit, and in that a pump downstreams of the valve is connected to a thermometer for measuring the outflow temperature from the boiler and adapted for regulating said temperature by controlling rotational speed.

This object is further achieved as regards the regulating circuit by a regulating circuit for regulating flow temperature of a liquid in a heating circuit in a domestic central heating system, in which heating circuit the heat sink is a heat exchanger, which is connected to the heat source by means of a first conduit for transfer of the liquid from the heat exchanger to the heat source and a second conduit for transfer of the liquid from the heat source to the heat exchanger, wherein a bypass is provided for transfer of liquid directly from the second conduit to the first conduit, which regulating circuit is characterized in that a thermostatic threeway valve is provided in the second conduit and connected to the bypass for regulating an inflow temperature to the heat exchanger by mixing the liquid from the first conduit with the liquid from the second conduit, and in that a pump is connected to a thermometer measuring the outflow temperature of the ouflow liquid, or a temperature related thereto, from the heat exchanger and adapted for regulating said temperature by controlling rotational speed.

The combination of mechanical regulating by means of a self-regulated valve and electric/electronic regulating by means of a thermometer connected to a pump provides for a simple regulating circuit and method without the need of sophisticated and expensive control and detecting means.

### Brief Description of the Drawings

In the following, preferred embodiments of a regulating circuit according to the invention are described in greater detail with reference to the accompanying drawings, in which
Fig 1 schematically shows a regulating circuit with a boiler and a thermal storage vessel.
Fig 2 schematically shows the regulating circuit with a heat exchanger.

### Detailed Description of Preferred Embodiments of the Invention

The invention refers to a method for regulating flow temperature of a liquid in a heating circuit 1 in a domestic central heating system, which heating circuit comprises a heat source and a heat sink, wherein an outflow liquid from the heat source is supplied as an inflow liquid to the heat sink and vice versa. The method comprises the following steps:
mixing an outflow liquid from a first of the heat source and the heat sink with an outflow liquid from a second of the heat source and the heat sink in a thermostatic threeway valve, for regulating an inflow temperature of an inflow liquid to said first of the heat source and the heat sink,
measuring an outflow temperature, or a temperature related thereto, of the outflow liquid from said first of the heat source and the heat sink,
comparing the measured outflow temperature with a desired temperature and
if there is a difference between the measured temperature and the desired temperature regulating the outflow temperature of the outflow liquid from said first of the heat source and the heat sink by controlling rotational speed of a pump.

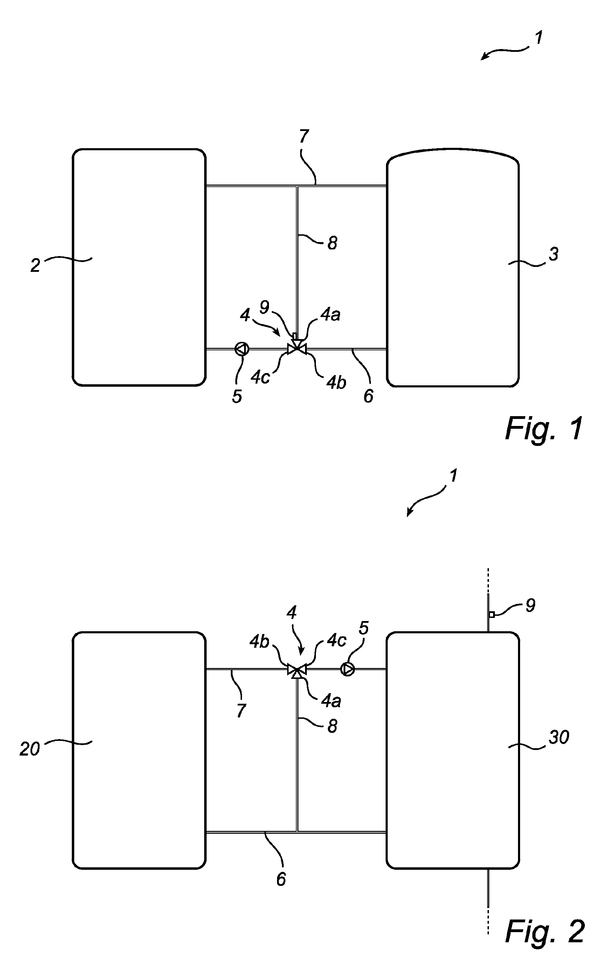

In fig 1 and fig 2 are shown heating circuits 1 in a domestic central heating system. Each heating circuit comprises a heat source (2, 20) and a heat sink (3, 30). The liquid in the circuits is water, although other liquids could be used. In the drawings identical reference numbers designate similar elements.

In fig 1 there is shown a temperature regulating liquid circuit which comprises the heating circuit with a boiler 2 as the heat source and a thermal storage vessel 3 as the heat sink. The boiler 2 is heated by firing of fuel, such as oil, wood, pellets or coal.

The thermal storage vessel is connected to the boiler 2 by means of a first conduit 6 for transfer of the water from the thermal storage vessel 3 to the boiler 2 and a second conduit 7 for transfer of the water from the boiler 2 to the thermal storage vessel 3. A bypass 8 is provided for transfer of water directly from the second conduit 7 to the first conduit 6.

A thermostatic threeway valve 4 is provided in the first conduit 6. The valve has a first inlet port 4a connected to the bypass 8, wherein a second inlet port 4b is connected to one part of the first conduit 6 and an outlet port 4c is connected to another part of the first conduit 6. Instead of a bypass it would also be possible to have a second outflow from the boiler with a conduit connected directly to the first inlet port 4a.

A thermometer 9 is connected to a pump 5, provided downstreams of the valve in the first conduit 6 between the valve 4 and the inlet to the boiler 2.

The thermometer is provided in the first inlet port 4a of the thermostatic threeway valve but could be arranged anywhere between the outflow from the boiler and this valve inlet port.

The boiler 2 is heating the water to be supplied to the thermal storage vessel 3. The water in this vessel is in turn used for heating, wherein hot water is withdrawn from the top of the vessel and cold water is delivered to its bottom. Hence the water in the vessel 3 has to have a specific temperature stratification. For this reason it is important that the temperature of the water supplied to the vessel has a constant and high temperature, as water with a lower temperature would impair this stratification.

For optimum combustion and for preventing corrosion and tar formation the boiler should not work at too low temperatures. The minimum temperature is approximately 60°C, but depends on type of the boiler.

The valve is regulating an inflow temperature to the boiler 2 by mixing the water from the first conduit 6 via the second inlet port 4b with the water from the second conduit 7 via the first inlet port 4a for supplying water with an appropriate temperature to the boiler 2. The valve is chosen in dependence of the boiler. With a minimi inflow temperature to the boiler of 60°C the valve will open at this temperature and will be completely open at 70°C.

The outlet flow temperature from the boiler 2 is measured by the thermometer 9. This temperature should be as high as possible without risking tripping the boiler security system or boiling of the water, i.e. approximately 80 - 95°C. The measured temperature is compared with a desired temperature. If the measured temperature is lower than the desired temperature the rotational speed of the pump is decreased, whereas if the measured temperature is higher than the desired temperature the rotational speed is increased.

In fig 2 there is shown a regulating circuit 1 having a heating circuit which comprises a heat exchanger 30 as the heat sink and a thermal storage vessel 20 as a heat source. However, the heat source could also be a district heating heat exchanger or a boiler.

The heat exchanger 30 is connected to the thermal storage vessel 20 by means of a first conduit 6 for transfer of the water from the heat exchanger 30 to the thermal storage vessel 20 and a second conduit 7 for transfer of the water from thermal storage vessel 20 to the heat exchanger 30. A bypass 8 is provided for transfer of water directly from the second conduit 7 to the first conduit 6.

A thermostatic threeway valve 4 is provided in the second conduit 6 and connected to the bypass 8.

A pump 5 is provided downstreams of the valve 4 in the second conduit 7. The pump may also be provided in the first conduit 6 upstreams of the bypass 8. A thermometer 9, connected to the pump 5, is provided at an outlet from an secondary side of the heat exchanger 30.

Heated water is delivered to the heat exchanger 20 from the thermal storage vessel 3 and is in turn used for heating for example tap water. In this case it is of importance to keep the temperature of the water below a fix temperature of approximately 55-60°C as water with too high a temperature might cause precipitation of lime in the heat exchanger and thus impair the heat exchanger and decrease its useful life. The water temperature in the thermal storage vessel is stratified as cold water is supplied to the thermal storage vessel 3 at the bottom of the vessel and hot water is withdrawn from the top of the vessel. Also in this case it is important to maintain stratification and hence to control the inflow temperature.

In this case a temperature related to the temperature of the outflow water is measured by the thermometer 9 provided at an outlet from an secondary side of the heat exchanger 30. The pump is adapted for regulating said temperature by rotational speed control. The measured temperature is compared with a desired temperature. If the measured temperature is lower than the desired temperature the rotational speed of the pump is increased, whereas if the measured temperature is higher than the desired temperature the rotational speed is decreased.

This combination of a mechanical and an electronic/electrical regulation provides for a regulating circuit without conflicting regulating points. It is possible to adjust both an inflow temperature and an outflow temperature to a heat source or a heat sink in the circuit. The cooperating pump and valve makes it possible to regulate faster and within a larger working range than would be possible with only valve regulation or only pump speed control.

## Claims

1. Method for regulating flow temperature of a liquid in a heating circuit (1) in a domestic central heating system, which circuit comprises a heat source (2, 20) and a heat sink (3, 30), wherein an outflow liquid from the heat source is supplied as an inflow liquid to the heat sink and vice versa, comprising
mixing an outflow liquid from a first (2, 30) of the heat source and the heat sink with an outflow liquid from a second (3, 20) of the heat source and the heat sink in a thermostatic threeway valve (4), for regulating an inflow temperature of the inflow liquid to said first of the heat source and the heat sink,
measuring an outflow temperature, or a temperature related thereto, of the outflow liquid from said first of the heat source and the heat sink,
comparing the measured outflow temperature with a desired temperature and
if there is a difference between the measured temperature and the desired temperature regulating the outflow temperature of the outflow liquid from said first of the heat source and the heat sink by controlling rotational speed of a pump (5), arranged downstreams the valve (4).

2. Method for regulating flow temperature according claim 1, wherein said first of the heat source and heat sink is a boiler (2) and the heat sink is a thermal storage vessel (3),
comprising regulating the liquid temperature by controlling rotational speed in such a way that if the measured outflow temperature is lower than a desired temperature the rotational speed is decreased, whereas if the measured outflow temperature is higher than the desired temperature the rotational speed is increased.

3. Method for regulating flow temperature according claim 2, comprising measuring of the outflow temperature in a first inlet port (4a) of the thermostatic threeway valve which port is receiving the outflow liquid from said first of the heat source and the heat sink.

4. Method for regulating flow temperature according claim 1, wherein said first of the heat source and heat sink is a heat exchanger (30),
comprising regulating the liquid temperature by controlling rotational speed in such a way that if the measured outflow temperature is lower than a desired temperature the rotational speed is increased, whereas if the measured outflow temperature is higher than the desired temperature the rotational speed is decreased.

5. Method for regulating flow temperature according claim 4, comprising measuring of the outflow temperature at an outlet from an secondary side of the heat exchanger.

6. Regulating circuit for regulating flow temperature of a liquid according to claim 1, in a heating circuit (1) in a domestic central heating system, in which heating circuit the heat source is a boiler (2) and the heat sink is a thermal storage vessel (3), which is connected to the boiler (2) by means of a first conduit (6) for transfer of the liquid from the thermal storage vessel (3) to the boiler (2) and a second conduit (7) for transfer of the liquid from the boiler (2) to the thermal storage vessel (3) , wherein a bypass (8) is provided for transfer of liquid directly from the second conduit (7) to the first conduit (6),
**characterized in that** the thermostatic threeway valve (4) is provided in the first conduit (6) and connected to the bypass (8) for regulating an inflow temperature to the boiler (2) by mixing the liquid from the first conduit (6) with the liquid from the second conduit (7), and
**in that** the pump (5) downstreams of the valve is connected to a thermometer (9) for measuring the outflow temperature from the boiler (2) and adapted for regulating said temperature by controlling of rotational speed of the pump (5).

7. Regulating circuit according to claim 6, wherein the pump (5) is arranged in the first conduit (6) between the valve (4) and the inlet to the boiler (2).

8. Regulating circuit for regulating flow temperature of a liquid according to claim 1, in a heating circuit in a domestic central heating system, in which heating circuit the heat sink is a heat exchanger (30), which is connected to the heat source (20) by means of a first conduit (6) for transfer of the liquid from the heat exchanger (30) to the heat source (2) and a second conduit (7) for transfer of the liquid from the heat source (20) to the heat exchanger (30) , wherein a bypass (8) is provided for transfer of liquid directly from the second conduit (7) to the first conduit (6),
**characterized in that** the thermostatic threeway valve (4) is provided in the second conduit (6) and connected to the bypass (8) for regulating an inflow temperature to the heat exchanger (2) by mixing the liquid from the first conduit (6) with the liquid from the second conduit (7), and **in that** the pump (5) is connected to a thermometer (9) measuring the outflow temperature of the ouflow liquid, or a temperature related thereto, from the heat exchanger (30) and adapted for regulating said temperature by controlling of rotational speed of the pump (5)

9. Regulating circuit according to claim 8, wherein the thermometer (9) is provided at an outflow from a secondary side of the heat exchanger.
